# EUROPEAN PATENT APPLICATION

(11) **EP 0 987 091 A1**
(43) Date of publication of application: **22.03.2000**
(21) Application number: 99307371.7
(22) Date of filing: 16.09.1999
(51) Int. Cl.: B29C 45/58, B29C 47/36, B01F 5/06, B29B 7/32

(54) **Static mixers in an injection nozzle**

(30) Priority: 16.09.1998 US 154059
(71) Applicant: Yan, Er Ming, Kwun Tong, Kowloon (HK)
(72) Inventor: Yan, Er Ming, Kwun Tong, Kowloon (HK)
(74) Representative: Luckhurst, Anthony Henry William

(57) **Abstract**

A plastics injection molding machine has a nozzle (13) incorporating six mixing head components (14). Normally, such a nozzle would include not more than four mixing head components and be arranged to mix the materials. By having four to six or more mixing components, the mixing head components serve to blend a plastics material mix supplied from a hopper (10). In this way, blending and injection molding is carried out in one step, leading to reduced cost on the one hand, and can enable, on the other hand, a wider range of mixes to be used efficiently for injection molded.

## Description

### BACKGROUND OF THE INVENTION

### 1. Field of the Invention

The invention relates to injection molding.

### 2. Description of Prior Art

Injection molding is well-known for producing various plastics material items or products used in the toy industry, electrical industry household appliances and houseware, for example. Each application requires certain properties and such properties are provided inherently by selecting the different plastics materials generally available such as general purpose polystyrene (GPPS), and polypropylene (PP). The inherent properties can be modified by blending with different polymers and additives. To provide high impact polystyrene (HIPS), synthetic rubber polybutadiene can be added to GPPS through polymerisation. Also, styrene-butadiene-styrene block polymers (SBS) or other derivative polymers blended with GPPS will create a high impact resistance usable product with high surface gloss, although at present acrylonitrile-butandiene-styrene (ABS) is preferred due to its relatively lower cost. The lower cost is due to the present requirement for pre-blending of the GPPS/SBS block polymers prior to the injection molding procedure. Without a pre-blending step due to incompatibility, combinations of SBS and GPPS leads to lower mechanical properties, weak weld lines, and color striping in the injection molded products. However, as GPPS and SBS block polymers and other derivative polymers do not contain the relatively expensive acrylonitrile monomer that is present in ABS, there is otherwise a good economic opportunity for producing a lower cost material by blending GPPS and SBS.

### SUMMARY OF THE INVENTION

It is an object of the invention to make use of this opportunity.

According to one aspect of the invention, there is provided a plastics injection molding machine for a plastics material mix, comprising a plurality of mixing head components arranged in series to form an injection nozzle for the machine that blend the mix during passage through the nozzle.

The plastics injection molding machine may have at least four to six, and preferably six, mixing head components.

According to another aspect of the invention there is provided a plastics molding process comprising passing a plastics material mix through a plurality of mixing heads in series, that form a plastics molding machine nozzle, to blend the mix during the passage to a mold.

The plastics material mix may comprise GPPS and SBS block polymers or their derivatives, PP and SBS block polymers or their derivatives, and/or additives, such as internal/external lubricants, materials compatible additives, or others, i.e. bounding agents, coupling agents, and compatibility agent.

### BRIEF DESCRIPTION OF THE DRAWINGS

A plastics injection molding machine and process for making a wide range of types of plastics material molded articles according to the invention will now be described by way of example with reference to the accompanying drawings in which :-
Figure 1 is a sectional elevation of the machine; and
Figure 2 is a side view of two mixing head components for the machine.

### DETAILED DESCRIPTION OF PREFERRED EMBODIMENT

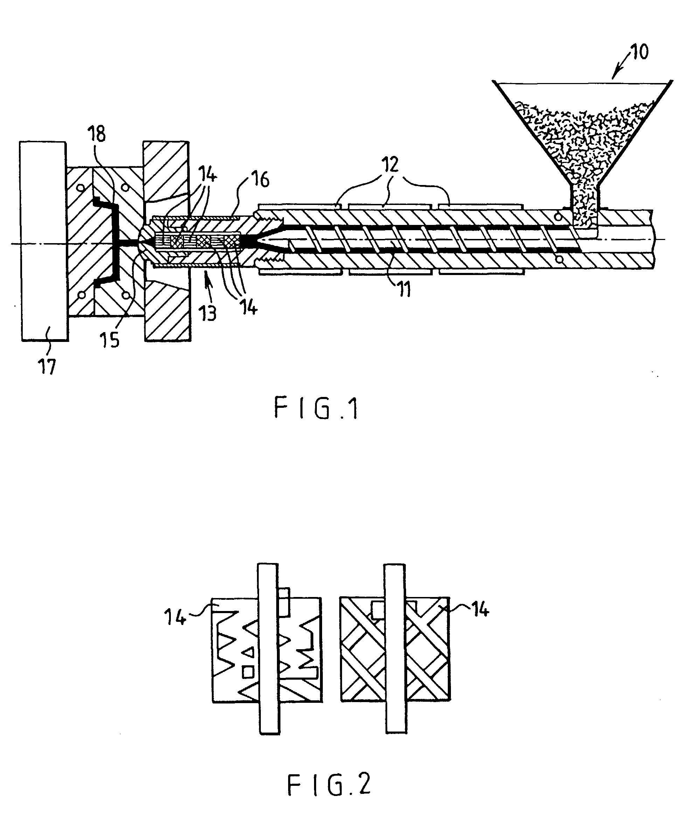

Referring to the drawings, in Figure 1 a hopper 10 for holding a plastics material mix is mounted on an end of a screw feeder 11 surrounded by electric heating pads 12. A nozzle 13 contains six built-in mixing head components 14 in series array leading to a constricted nozzle head 15 and is surrounded by electric heating pads 16. The screw feeder 11 may incorporate conventional screw and barrel, or higher dispersion screw and barrel, driven by conventional hydraulic or electrical motor, or higher torque hydraulic or electrical motor, for overcoming the extra rotation power needed by the higher dispersion screw. Also, the injection unit may be combined with conventional injection power or combined with higher injection power, for overcoming the resistance to the molten plastics material passing through the nozzle 13. A mold 17 is held against the nozzle head 15 while molten plastics material is injected into the mold to form a molded product 18. The injection molding machine is otherwise of a generally well-known type and is operated in a well-established manner, except for the configuration of the nozzle.

It is already known to provide mixing head components in a nozzle to disperse the pigments in the plastics materials as they pass through a nozzle. Such mixing head components comprise a number of thin blade-like members specially configured to shear and turn the plastics as it passes through the nozzle. In a known arrangement, the components have a specific longitudinal orientation and are arranged in series with adjacent mixing head components having their orientations at 180° to one another. A particular mixing head component is available from Sulzer Chemtech (Switzerland) as their product SMK-X, where mixing head components are provided in a series array. It will be noted, in contrast to this Sulzer product that the described injection molding machine has six mixing head components and this enables the plastics materials from the hopper 10 to be blended as they pass together through the nozzle 13. This leads to a molding machine as described that combines blending and injection molding in one step. It has been pointed out above that many otherwise apparently desirable combinations of different plastics materials are not available at competitive prices because of the hitherto necessity to blend the materials in a separate step.

In embodiments of the invention it is possible to have further mixing head components, although each mixing head component increases the hydraulic forces required to push the mix through the nozzle 13. Satisfactory blending in the described nozzle is achieved using six mixing head components but it is preferable for some plastics material mixes to use eight (more than six) mixing head components to ensure good blending.

It will be appreciated that a chosen number of mixing head components for achieving an object of the invention also depends on the configuration of the mixing head components themselves. What transpires more generally in terms of this invention is the realisation that blending and injection moulding can be achieved in one step. Also, by suitable development or re-designing of the mixing head components or the use of mixing head components having a different construction, fewer than six (such as four or five) mixing heads may be used, with the implementation of blending/mixing and injection molding in a single step operation.

Various combinations of plastics materials hitherto not cost-effective or not deemed available or satisfactory for plastics injection molding can be used with the described plastics molding machine. That is, where blending and injection molding is carried out in one step. Such mixtures now include :-
1. SBS block polymers or their derivatives / GPPS by weight ratios 10% to 13% and 90% to 87%, respectively. In the case of SBS, the B-butadiene content is normally 40% to 60%, but the content may be 20% or less. For better mechanical properties balance, the butadiene content should be 4% to 10% by weight of the mixture.
2. GPPS / transparent SBS block polymers or their derivatives. For excellent transparency products, the GPPS content should be 97% by weight or higher. For better impact resistance products, the GPPS content should be 70% to 30%, at some sacrifice to transparency.
3. PP and SBS block polymers or their derivatives (e.g. with 40% to 60% B-butadiene content) by weight ratio of 95% to 85% and 5% to 15%, respectively. In such mixes, the SBS serves to reinforce the PP.
4. GPPS or PP and SBS block polymers or their derivatives, with SBS forming by weight 50% to 90% of the mix. Such products have properties similar to lower cost and higher hardness flexible material compounds, e.g. polyvinyl chloride (PVC) that is now unacceptable by law in some countries.

The derivatives of SBS block polymers include SIS (styrene-isoprene-styrene), SEBS (styrene-ethylenebutylene-styrene) and SB (styrene-butylene).

The various mixes mentioned above may be known per se or have properties that would be possibly predictable by persons skilled in the art. However, it was previously not perceived possible to combine blending and injection molding in one step, despite the clear commercial advantages. Also, the one step blending and injection molding can be beneficial for some mixes. Thus, embodiments of the invention comprises molding machines and processes that render known or predicable mixes cost-effective to operate or produce, and in some cases enhance blending and injection molding of mixes that were hitherto less efficient when using two separate steps.

## Claims

1. A plastics injection molding machine for a plastics material mix, comprising a plurality of mixing head components arranged in series to form an injection nozzle for the machine that blend the mix during passage through the nozzle.

2. A plastics injection molding machine according to claim 1, including at least four to six mixing head components.

3. A plastics injection molding machine according to claim 1, including six mixing head components.

4. A plastics molding process comprising passing a plastics material mix through a plurality of mixing heads in series, that form a plastics molding machine nozzle, to blend the mix during the passage to a mold.

5. A plastics molding process according to claim 4, characterised in that the plastics material mix comprises GPPS and SBS block polymers or their derivatives.

6. A plastics molding process according to claim 4, characterised in that the plastics material mix comprises PP and SBS block polymers or their derivatives.
